# EUROPEAN PATENT SPECIFICATION

(11) **EP 1 798 947 B1**
(45) Date of publication and mention of the grant of the patent: **03.04.2013**
(21) Application number: 05791884.9
(22) Date of filing: 26.09.2005
(51) Int. Cl.: H04L 29/06, H04M 3/46

(54) **Method and server for processing a forking service based on SIP**
Verfahren und Server zur Behandlung eines SIP-basierenden Forking-Dienstes
Procédé et serveur pour traiter un service de bifurcation basé sur SIP

(30) Priority: 30.09.2004 CN 200410081074
(43) Date of publication of application: 20.06.2007
(73) Proprietor: Huawei Technologies Co., Ltd., Longgang District, Shenzhen Guangdong 518129 (CN)
(72) Inventor: WU, Yajuan, Shenzhen, Guangdong 518129 (CN)
(74) Representative: Isarpatent
(86) International application number: PCT/CN2005/001567
(87) International publication number: WO 2006/034638

(56) References cited:
- CN-A- 1 440 610
- US-A1- 2004 187 109
- "3rd Generation Partnership Project; Technical Specification Group Services and System Aspects; IP Multimedia Subsystem (IMS); Stage 2 (Release 6); 3GPP TS 23.228" ETSI STANDARDS, EUROPEAN TELECOMMUNICATIONS STANDARDS INSTITUTE, SOPHIA-ANTIPO, FR, vol. 3-SA, no. V641, January 2004 (2004-01), XP014021933 ISSN: 0000-0001
- JOHNSTON MCI R SPARKS C CUNNINGHAM S DONOVAN DYNAMICSOFT K SUMMERS SONUS A: "Session Initiation Protocol Service Examples; draft-ietf-sipping-service-examples-07 .txt;" IETF STANDARD-WORKING-DRAFT, INTERNET ENGINEERING TASK FORCE, IETF, CH, vol. sipping, no. 7, 16 July 2004 (2004-07-16), XP015027959 ISSN: 0000-0004
- ROSENBERG J ET AL: "SIP: Session Initiation Protocol" IETF STANDARD, INTERNET ENGINEERING TASK FORCE, IETF, CH, June 2002 (2002-06), pages 1-269, XP015009039 ISSN: 0000-0003

## Description

### Field of the Technology

The present invention relates to communication field, more particularly, to a method for processing a forking service.

### Background of the Invention

Session Initiation Protocol (SIP) is an IP telephone signaling protocol presented by the Internet Engineering Task Force (IETF). As this name connotes, the SIP is used for initiating a session, and it is a type of control and signaling protocol for the application layer, used for creating, modifying and finishing the session with one or more than one participant. SIP can dynamically adjust and modify the properties of a session, such as the bandwidth requirement of the session, the type of the transmitted media (voice, video and text), the coding/decoding format of the media and the support for multicast and unicast.

The SIP protocol has many features, and a very useful feature is fork function. This function makes it possible to send one call to multiple destinations, and enable the caller to find the receiver at any time. The specific implementation includes fork-forwarding a request through a state proxy server, thereby routing a request message to multiple destinations, which will return a response message, respectively, i.e. all the destinations make appropriate processing as if they received a normal request. In this way, if the receiver has subscribed to the fork function, as long as a call initiator sends out a call, the state proxy server will forward this call to multiple destinations. This feature makes SIP able to support some traditional telephone communication services, for example, multiparty service or using extensions. The state proxy server above means that the proxy server can memorize the information of each received request (e.g. transaction status) and the information of any request sent as the processing result for a request. Such information may influence the state proxy server in processing the follow-on messages associated with a certain request which is received previously.

According to the description of the SIP protocol, more than one response message returned from multiple destinations can be processed by the proxy server, or be forwarded directly to the call initiator to be processed.

Internet Multimedia Subsystem (IMS) is superimposed on the packet domain network. Since the network structure of IMS is independent from the bottom-layer bearer network, IMS is independent of the type of the terminal used by the user and independent of the type of the access network. In this way, IMS not only can be applied to 3GPP, but also can be applied to many other types of network architecture. In IMS, the SIP protocol is used as the signaling control protocol for the IP multimedia session. When selecting the SIP as the signaling control protocol, 3GPP uses only one processing mode, i.e. the mode in which multiple responses caused by using the forking service are processed by the call initiator, and the state proxy server only forwards the message.

There are two conventional methods for processing the forking service, which are hereinafter described, respectively.

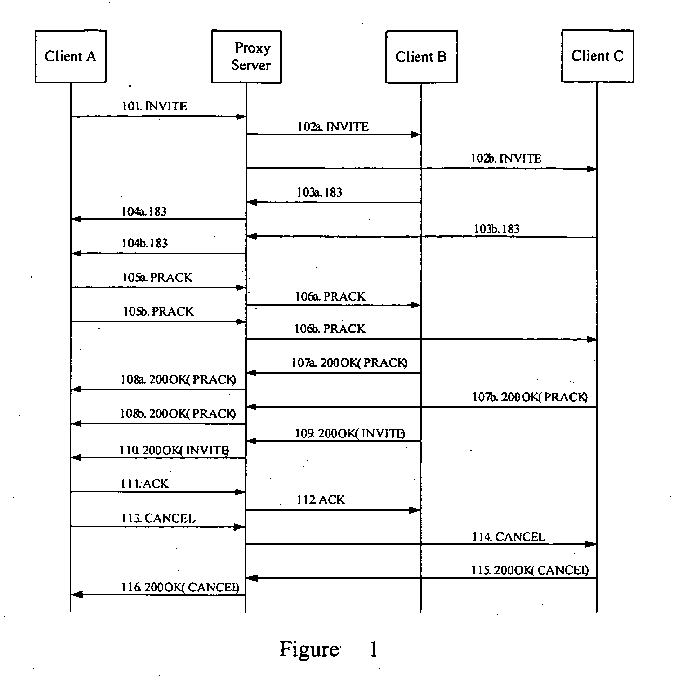

FIG. 1 is a schematic diagram illustrating the processing flow of the first method in the prior art. After receiving a first final-response, the client that initiates the session request returns immediately an acknowledgement (ACK) to the client that has sent the final-response as confirmation, then releases the other existing dialogs waiting for final-response that has been created for the same session, then interacts with the client that has returned the first final-response and begins to transmit the data. In this process, client A is the client that initiates the session request i.e. sender, the receiver has subscribed to the fork function and the receiver are two destination clients i.e. client B and client C, and the proxy server is a state proxy server. The specific process of this method in the prior art is as follows:
Step 101: client A sends an INVITE request to the proxy server.
Step 102a, 102b: according to the subscribing information of the receiver, the proxy server executes the fork function, copies the INVITE request and forwards it to client B and client C, respectively.
Step 103a, 103b: client B and client C that have received the INVITE request return provisional responses for INVITE request, e.g. 183 (Session Progress) response to the proxy server, respectively.
Step 104a, 104b: the proxy server forwards the received 183 responses to client A, respectively.
Step 105a, 105b: client A sends provisional acknowledgements (PRACK) to the proxy server to confirm receiving 183 response.
Step 106a, 106b: the proxy server forwards the received PRACK messages to client B and client C, respectively.
Step 107a, 107b: client B and client C respond to the received PRACK, e.g. return 200 OK for the PRACK to the proxy server, respectively.
Step 108a, 108b: the proxy server forwards the received 200 OK messages for the PRACK to client A, respectively.
Step 109: client B completes media negotiation and resource reservation, and returns the final-response for the INVITE, e.g. 200 OK response for the INVITE to the proxy server.
Step 110: the proxy server forwards this final-response to client A.
Step 111: client A returns the ACK message to the proxy server to confirm receiving the final-response, e.g. 200 OK for the INVITE.
Step 112: the proxy server forwards the ACK message to the corresponding client B; and at this time, client A allocates required resources according to the media description that has been negotiated successfully, and begins to transmit the data to client B.
Step 113: if client A finds there are still other dialogs that have not received the final-response in connection with this session, client A initiates a releasing process for these dialogs immediately, i.e. client A sends a CANCEL request to the proxy server.
Step 114: the proxy server forwards the CANCEL message to the corresponding client C.
Step 115: after receiving the CANCEL, client C executes the processes of releasing the dialog and releasing the resource, and then returns the 200 OK for the CANCEL as the response that the dialog has been released successfully.
Step 116: the proxy server forwards this 200 OK for the CANCEL response to client A, and so far, client A completes the process of releasing the dialog between client C and itself.

The above receiving client can be automatic answering equipment, or non-automatic answering equipment.

It can be seen from the above flow that, once receiving the first final-response, the sender may immediately cancel the other dialogs waiting for final-response in connection with this session, i.e. immediately cancel the dialogs that have received the provisional response but have not received the final-response and have not sent a CANCEL message.

Although the sender has sent the CANCEL message, it can not ensure that it will not receive final-responses from other dialogs in connection with this session, because these final-responses may have been generated before the CANCEL message is sent and processed. For example, when an automatic answering device is served as the receiver, the processing capability will be very high and the course of executing media negotiation and resource reservation may be completed quickly. Accordingly, after sending a CANCEL message, the sender may also receive follow-on final-responses, e.g. 200 OK messages. Then the initiator also needs to process such final-responses properly, i.e. firstly confirm the final-response, then initiate the process of releasing the dialog by sending a BYE message. Meanwhile, after receiving the CANCEL message, the receiver may find the dialog waiting for final-response to be cancelled no longer exists because the dialog has sent the final-response message and the state of this dialog has changed. At this time, however, the receiver also needs to make proper processing.

It can be seen from the above analysis that in accordance with the first method in the prior art, the initiator and the receiver of the session both need to save a large amount of states of the session, moreover need to distinguish various abnormal states due to the normal fork function from the real abnormal state of the session. All above mentioned makes the service and the processing course complicated. Moreover, in accordance with this method in the prior art, when the responding speed of the receiver is relatively fast, the initiator will always need to process the same dialog twice, one is the processing of the dialog which is waiting for final-response, the other is the processing of the dialog after the final-response of the same dialog has been received. Although the states of these two processing are different, the targets of these two processing are both to cancel this useless dialog. As the processing method is imperfect, two canceling processes are carried out, which causes a large amount of redundant signaling.

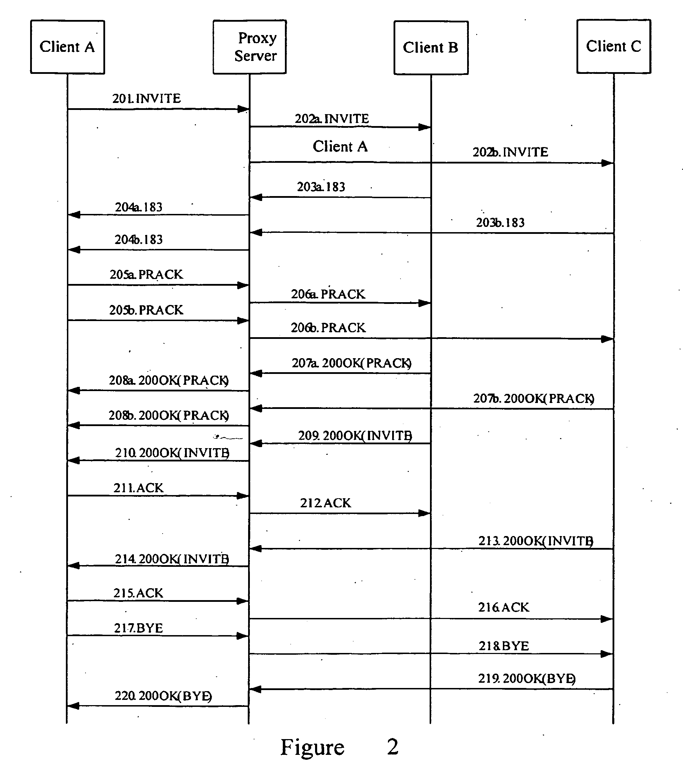

FIG. 2 is a schematic diagram illustrating the processing flow of the second method in the prior art. After receiving the first final-response, the sender returns an acknowledgement (ACK) to the client that sent the final-response immediately as confirmation, then interacts with the client that returned the first final-response, and begins to transmit the data. At this time, many dialogs waiting for final-response in connection with the same session still exist in the sender. When receiving a final-response from another dialog in connection with this session later on, the sender will first send an ACK message to confirm this dialog, and then send a BYE message immediately to release this dialog. In this process, client A is the sender, the receiver has subscribed to the fork function, the two destination clients of the receiver are client B and client C, and the proxy server is a state proxy server. The specific process of the second method in the prior art is as follows:
Step 201: client A sends an INVITE request to the proxy server.
Step 202a, 202b: according to the subscribing information of the receiver, the proxy server executes the fork function, copies the INVITE request and forwards the request to client B and client C, respectively.
Step 203a, 203b: client B and client C that have received the INVITE request return provisional responses for the INVITE request, e.g. 183 (Session Progress) response to the proxy server, respectively.
Step 204a, 204b: the proxy server forwards the received 183 responses to client A, respectively.
Step 205a, 205b: client A sends PRACK to the proxy server to confirm receiving 183 response.
Step 206a, 206b: the proxy server forwards the received PRACK messages to client B and client C, respectively.
Step 207a, 207b: client B and client C respond to the received PRACK, e.g. return 200 OK for the PRACK to the proxy server, respectively.
Step 208a, 208b: the proxy server forwards the received 200 OK messages for the PRACK to client A, respectively.
Step 209: client B completes media negotiation and resource reservation, and returns the final-response for the INVITE, e.g. 200 OK response for the INVITE to the proxy server.
Step 210: the proxy server forwards this final-response to client A.
Step 211: client A returns an ACK message to the proxy server to confirm receiving the final-response 200 OK for the INVITE.
Step 212: the proxy server forwards the ACK message to the corresponding client B; client A allocates required resources according to the media description that has been negotiated successfully, and begins to transmit the data to client B.
Step 213: client C also completes media negotiation and resource reservation, and returns a final-response 200 OK for the INVITE to the proxy server.
Step 214: the proxy server forwards this final-response to client A.
Step 215: client A returns an ACK message to the proxy server to confirm receiving the final-response 200 OK for the INVITE.
Step 216: the proxy server forwards the ACK message to the corresponding client C.
Step 217: as client A has established a session with client B, client A initiates a process of releasing the subsequent sessions immediately and sends the BYE request to the proxy server.
Step 218: the proxy server forwards the BYE message to the corresponding client C.
Step 219: after receiving the BYE, client C executes the processes of releasing the dialog and releasing the resources, and then returns a 200 OK for the BYE as the response that the dialog has been released successfully.
Step 220: the proxy server forwards this 200 OK for the BYE response to client A, and so far, client A completes the process of releasing the dialog between client C and itself.

The above receiving client can be an automatic answering device, or a non-automatic answering device.

In the second method in the prior art, once receiving the first final-response 200 OK message, the sender will return an ACK for confirmation, then establish a session and begin the process of transmitting the data. But the initiator will not carry out any subsequent processing for the other dialogs waiting for final-response that have not been sent a CANCEL message to be released in this session. It is not until there is a final-response 200 OK arriving that the initiator will make the processing, i.e., confirm the set up dialog firstly and then release it immediately.

Although the problem that the same dialog is processed twice is solved in the second method in the prior art, significant defects still exist; there is no description on how to process the other dialogs after the sender that has subscribed to the fork function receives the first final-response. Although this dialog can be released after receiving the final-response subsequently, the receiver has to complete the media negotiation, the resource reservation and all the required processes for establishing a session before releasing this dialog. This is not only a waste of the resources of the client and the server, but the user will feel bad if the interaction between the users has been conducted for media negotiation, i.e., the user will have been ready to receive a session, but receives later a message of releasing the session from the other party. Moreover, the receiver may not be always able to return a final-response, if for some reasons, the initiator has received no final-response from some certain dialogs, the initiator and the proxy server have to keep the state information of the dialog, which can only be released by setting a timer. As a result, the utilization ratio of the resources is very low.
"draft-ietf-sipping-service-examples-07" gives examples of Session Initiation Protocol (SIP) services.
3GPP TS 23.228 v6.4.1 is a 3GPP standard defining stage-2 service description for IMS, which refers to "draft-ietf sipping-service-examples-07" and teaches that upon the reception of a first final 200 OK (for INVITE), the UE or MGCF shall acknowledge the 200 OK and cancel other early dialogues that may have been established. In case it receives a subsequent 200 OK, the UE or MGCF shall acknowledge the dialogue and immediately send a BYE to drop the dialogue (Section 4.2.7.3).
RFC 3261 describes SIP, in which the use of CANCEL message is also described.

### Summary of the Invention

The present invention provides a method for processing the forking service so as to simplify the process and implementation of a session adopting the fork function and to save the resources while avoiding the uncomfortable experience of the user according to an embodiment.

The technical scheme of the invention is as follows:

A method for processing a forking service according to an embodiment of the present invention includes:
sending, by a sender (Client A), a confirmation message after receiving a first final-response from a first receiver (Client B) to establish a session;
starting, by the sender (Client A), a timer (T) when receiving the first final-response from the first receiver (Client B);
sending a confirmation message to establish a session with a second receiver (Client C) if receiving before the timer (T) expires a second final-response from the second receiver (Client C) subsequent to the first final-response, and sending an indicating message to release the session established with the second receiver (Client C); and
sending a message to release the dialog with a third receiver (Client D) in connection with the session after receiving the expiration indication of the timer (T), if there is a dialog with the third receiver (Client D) and the sender (Client A) waits for a final-response from the third receiver (Client D) in connection with the session.

A sender initiating a session of a forking service according to an embodiment of the present invention includes:
means adapted to send a confirmation message after receiving a first final-response from a first receiver to establish a session,
means for starting a timer (T) when receiving the first final-response from the first receiver (Client B);
means adapted to send a confirmation message to establish a session with a second receiver if receiving before the timer (T) expires, a second final-response from the second receiver subsequent to the first final-response, and send a message to release the session established with the second receiver; and
means adapted to send a message to release the dialog with the third receiver in connection with the session, if there is a dialog with the third receiver and the sender waits for a final-response form the third receiver in connection with the session.

According to this invention, when receiving the first final-response, the initiator client sets up a timer for the other dialogs waiting for final-response in connection with this session. Before the timer expires, the process of releasing a dialog conducted by the initiator client is in line with the processing of the conventional method for receiving the final-response, which does not involve the processing of a dialog waiting for final-response; after the timer expires, the initiator client sends the BYE or CANCEL request to release the still existing dialogs waiting for final-response. In this way, by setting up a proper length of the timer, as the 200 OK final-response from the dialog that the receiver processed quickly is returned before the timer expires, the process of releasing a dialog conducted by the initiator client is similarly in line with the processing of the conventional method for receiving the final-response, which does not involve the processing of a dialog waiting for final-response; in case of a receiver that needs a longer responding time for interacting with the users, the initiator client uses the BYE or CANCEL message to release the dialog so as to avoid releasing a session immediately after it is set up at the receiver. According to the invention, not only can the processing and implementation of the fork function be simplified, but a large amount of resources of the client and the server could be saved. At the same time the bad feeling of the user could be avoided as well. The implementation of the invention is simple and will bring much benefit and convenience to the practical operation of the operators.

### Brief Description of the Drawings

FIG. 1 is a schematic diagram illustrating the processing flow in the first method in the prior art;
FIG. 2 is a schematic diagram illustrating the processing flow in the second method in the prior art;
FIG. 3 is a schematic diagram illustrating the processing flow according to an embodiment of the invention the invention after the session initiator receives the final-response;
FIG. 4 is a schematic diagram illustrating the processing flow according to an embodiment of the invention after the session initiator finds that the timer expires; and
FIG. 5 is a schematic diagram illustrating the processing flow according to an embodiment of the invention.

### Embodiments of the Invention

In the following detailed description of the preferred embodiments, reference is made to the accompanying drawings, which form a part hereof, and within which are shown by way of illustration specific embodiments by which the invention may be practiced. It should be understood that other embodiments may be utilized and structural changes may be made without departing from the scope of the invention.

The invention is hereinafter described in details with reference to the accompanying drawings.

When receiving a first final-response, a initiator client starts a preset timer for the other dialogs waiting for final-response in connection with this session; before the timer expires, the process of releasing a dialog conducted by the initiator client is similarly in line with the processing of the conventional method for receiving the final-response, which does not involve the processing of a dialog waiting for final-response; after the timer expires, the initiator client sends a BYE or CANCEL request to release the still existent dialogs waiting for final-response.

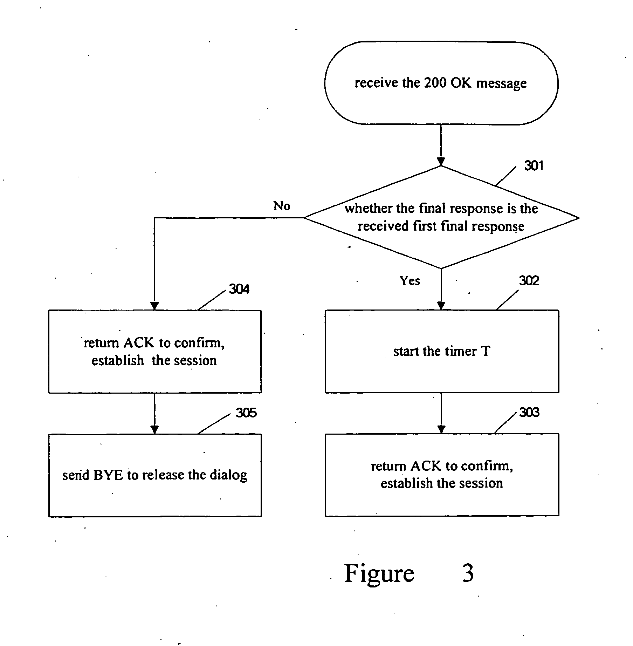

FIG. 3 is a schematic diagram illustrating the processing flow according to the invention after the session initiator receives the final-response. A timer T is defined and is valid for all the dialogs of a session is set up.

Step 301: after receiving a final-response, such as 200 OK message for the INVITE request, the sender judges whether this final-response is the first received final-response for this session request or not. If the final-response is the first received final-response, execute Steps 302∼303, otherwise execute Steps 304∼305.

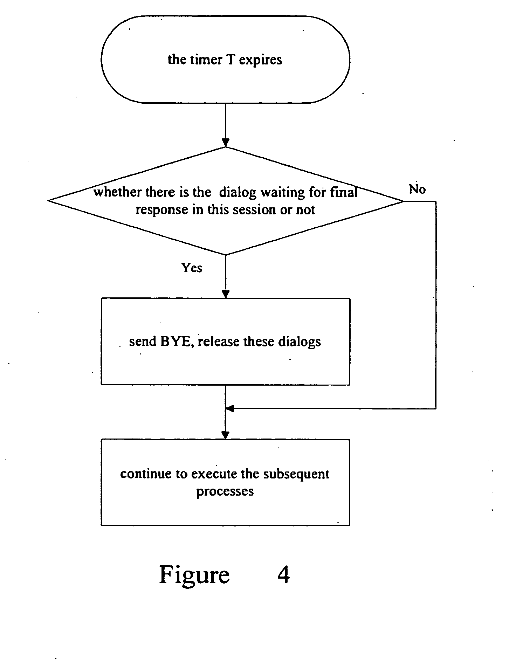

Steps 302∼303: start the preset timer T, which is valid for all the dialogs of this session; and at the same time, create an ACK message for the 200 OK response as the confirmation and establish a session; then, the sender waits for receiving the final-response from the receiver or for the expiration indication of the timer, if receiving the final-response, execute Step 301 again, if receiving the expiration indication of the timer, execute the process according to the flowchart shown in FIG. 4.

Steps 304∼305: make a confirmation for the received 200 OK message, and create immediately a BYE message to release the just established session, if the received response is not the first final-response, and the timer T has been started and does not expire. If the received final-response 200 OK message for the INVITE request is not the first final-response received by this client, which indicates that a session has been established for the INVITE request, the dialog corresponding to this 200 OK message needs to be released. After completing this releasing operation, the sender continues to wait for receiving a final-response from the receiver or the expiration indication of the timer T, if the sender receives the final-response, Step 301 is executed again, if the sender receives the expiration indication of the timer, the process according to the flowchart shown in FIG 4 is executed.

The processing after the timer T expires is described hereafter.

FIG. 4 is a schematic diagram illustrating the processing after the session initiator decides that the timer expires according to the embodiment. After the timer T expires, firstly the client examines whether there are dialogs waiting for final-response that have not yet been processed in the established session for this INVITE request, if yes, create BYE or CANCEL messages to release such dialogs waiting for final-response, then make processing according to the procedure in the prior art; if not, the client continues the processing according to the procedure in the prior art.

In connection with FIG 3 and 4, there are some points that should be explained.

The first is how to select the length of timer T. A receiver has two answering modes to employ depending on the analysis of the session request processed by the receiver. One is the automatic answering mode that requires no user intervention, and usually, this mode is set for the situation when the client is a machine or device, or the situation when the terminal equipment has been set by the user to execute automatic answering. As the answering is executed automatically by the equipment, the processing speed is very fast, and the answering usually can be completed within several seconds. The other is the non-automatic answering mode in which an answer can not be given before there is interaction with the user. This mode is typically employed in all the cases in which the user needs to make decisions. As there is the human-computer interaction process, or the process of human selecting and deciding, the processing time for returning a final-response is long, which is usually at least above ten seconds. According to the above analysis, the length of the timer T can be set close to ten seconds. It is obvious that the length of the timer given here is only a recommended value depending on the analysis. Along with the enhancement of the processing ability of the equipment, the set length of the timer may change constantly. Therefore, in specific implementation, this value should be a practical value decided by the operator through experiments and tests, and usually the value is no smaller than the answering time required by the client supporting automatic answer while being no bigger than the answering time required by the client supporting manual answer.

As the length of the timer is obtained after analysis and many experiments and tests, the processing situation of the two answering modes can be distinguished through the length, and it is ensured that there is no conflict between the two modes, that is, neither the situation when there is the final-response of an automatic answer that has not been received after the timer T expires nor the situation when the user has completed the interactive process with the terminal equipment and has returned a final-response before the timer T expires.

It is obvious that, according to the method of this invention, there is not any limit for the receiver, which can support both automatic answer and manual answer, or include only automatic answering equipment, or include only non-automatic answering equipment.

Next, after the timer expires, the sender can use the BYE message or the CANCEL message to release the dialog waiting for final-response. The BYE message can release both an established dialog and a dialog waiting for final-response, i.e. it is applicable to the two types of dialog; the CANCEL request can only be used to release the dialog waiting for final-response. Since the processing in the invention only involves releasing dialogs waiting for final-response, both of the request messages can be used.

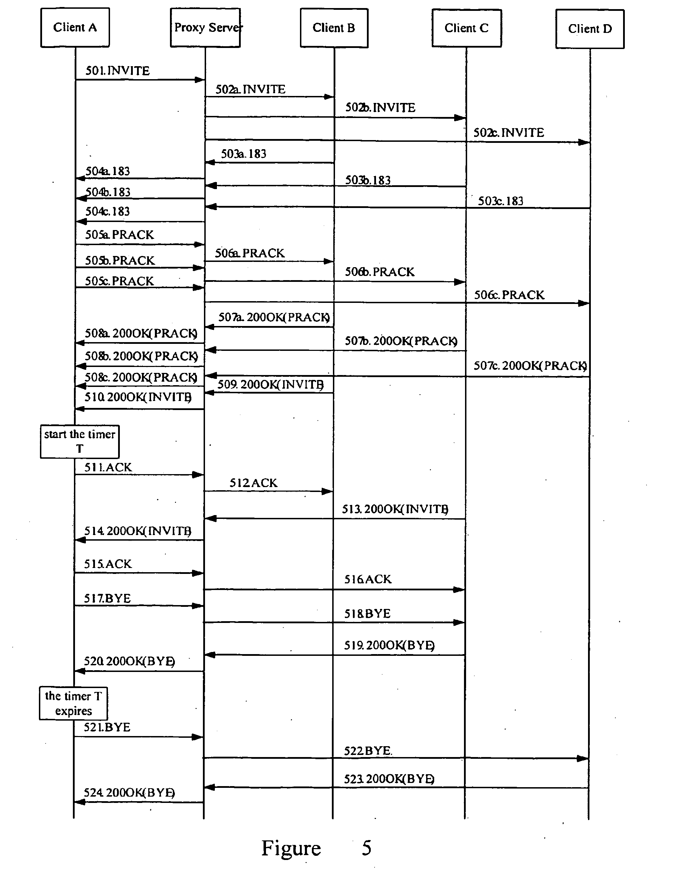

FIG. 5 is a flowchart illustrating the processing according to the embodiment. In this process, client A is the client that has initiated session request, the receiver has subscribed to the fork function, the receivers are client B, client C and client D, and the Proxy Server is a state proxy server. The specific process is described as follows:
Step 501: client A sends an INVITE request to the proxy server.
Step 502a, 502b, 502c: according to the subscribing information of the receiver, the proxy server performs the fork function, copies the INVITE request, and forwards the request to client B, client C and client D, respectively.
Step 503a, 503b, 503c: client B, client C and client D that have received the INVITE request respond provisionally to the INVITE request, respectively, and return the 183 (Session Progress) response to the proxy server, respectively.
Step 504a, 504b, 504c: the proxy server forwards the received 183 responses to client A, respectively.
Step 505a, 505b, 505c: client A sends a PRACK message to the proxy server to confirm the received 183 response.
Step 506a, 506b, 506c: the proxy server forwards the received PRACK message to client B, client C and client D, respectively.
Step 507a, 507b, 507c: client B, client C and client D respond to the received PRACK, and return the 200 OK for the PRACK to the proxy server, respectively.
Step 508a, 508b, 508c: the proxy server forwards the received 200 OK messages for the PRACK to client A, respectively.
Step 509: client B completes the media negotiation and the resource reservation, and returns a final-response 200 OK for the INVITE to the proxy server.
Step 510: the proxy server forwards this final-response to client A; after the client judges that it is the first received final-response for the INVITE request, start the timer T, then execute Step 511.
Step 511: client A returns an ACK message to the proxy server to confirm receiving the final-response 200 OK for the INVITE.
Step 512: the proxy server forwards the ACK message to the corresponding client B; client A allocates the required resources according to the media description that has been negotiated successfully, and begins to transmit the data to client B.
Step 513: before the timer T expires, client C completes the media negotiation and the resource reservation, and returns a final-response 200 OK for the INVITE to the proxy server.
Step 514: the proxy server forwards this final-response to client A.
Step 515: client A returns an ACK message to the proxy server to confirm receiving the final-response 200 OK for the INVITE.
Step 516: the proxy server forwards the ACK message to the corresponding client C.
Step 517: since client A has established a session with client B and the timer T does not expire currently, client A immediately initiates releasing processes for the subsequent dialogs and sends the BYE request to the proxy server.
Step 518: the proxy server forwards the BYE message to the corresponding client C.
Step 519: after receiving the BYE, client C executes the operations of releasing the dialog and releasing the resources, then returns a 200 OK for the BYE as the response indicating that the dialog has been successfully released.
Step 520: the proxy server forwards this 200 OK for the BYE response to client A, so far, client A completes the process of releasing the dialog between client C and itself.
Step 521: after receiving the expiration indication of the timer T, client A finds there is a dialog waiting for final-response in the established session for this INVITE request; then client A sends a BYE message to the proxy server, and executes the process of releasing this dialog.
Step 522: the proxy server forwards the BYE message to the corresponding client D.
Step 523: after receiving the BYE, client D executes the operations of releasing the dialog and releasing the resources, and then returns a 200 OK for the BYE as the response indicating that the dialog has been successfully released.
Step 524: the proxy server forwards this 200 OK for the BYE response to client A, by this time, client A completes the process of releasing the dialog between client D and itself.

In the above Step 521, after judging that the timer T expires and finding there is still a dialog waiting for final-response in the established session for this INVITE request, client A may alternatively send a CANCEL message to the proxy server, and execute the process of releasing this dialog. Accordingly, the proxy server forwards the CANCEL message to client D, and client D continues with the subsequent operations.

According to the embodiments described above, name of various messages is only an example and can not be intended to be limited to the embodiments shown herein. The foregoing is only preferred embodiments of the invention and is not intended to limit the invention. Any modification, equivalent replacement or improvement made under the principles of the invention should be covered by the protection scope of the invention.

## Claims

1. A method for processing a forking service based on Session Initiation Protocol (SIP), comprising :
sending (304, 511), by a sender (Client A), a confirmation message after receiving (510) a first final-response from a first receiver (Client B) to establish a session;
**characterized by**
starting, by the sender (Client A), a timer (T) when receiving the first final-response from the first receiver (Client B);
sending (304, 515) a confirmation message to establish a session with a second receiver (Client C) if receiving (514) before the timer (T) expires a second final-response from the second receiver (Client C) subsequent to the first final-response, and sending (517) an indicating message to release the session established with the second receiver (Client C); and
sending (521) a message to release the dialog with a third receiver (Client D) in connection with the session after receiving the expiration indication of the timer (T), if there is a dialog with the third receiver (Client D) and the sender (Client A) waits for a final response from the third receiver (Client D) in connection with the session.

2. The method according to Claim 1, further comprising setting a timer valid for all dialogs in connection with the session, and the set time period is a length of the timer.

3. The method according to Claim 2, wherein the step of sending (521) a message to release the dialog with the third receiver (Client D) comprises: upon reception of an expiration indication of the timer, sending (521) a message to release the dialog with the third receiver (Client D) waiting for final-response in connection with the session by the sender (Client A) which initiated the session.

4. The method according to Claim 1 or Claim 3, wherein the receivers (Clients B, C, D) support automatic answer and manual answer; or the receivers (Clients B, C, D) support only automatic answer; or the receivers (Clients B, C, D) support only manual answer.

5. The method according to Claim 4, wherein the set time period is not less than an answering time of a receiver (Clients B, C, D) supporting automatic answer and is not more than an answering time of a receiver (Clients B, C, D) supporting manual answer.

6. The method according to Claim 1, wherein the message to release the dialog waiting for final-response is a BYE message.

7. The method according to Claim 1, wherein the message to release the dialog waiting for final-response is a CANCEL message.

8. The method according to Claim 1, wherein the messages interacted between the sender (Client A) initiating the session and the receivers (Clients B, C, D) are forwarded by a state proxy server (Proxy Server).

9. A sender initiating a session of a forking service based on Session Initiation Protocol (SIP), comprising:
means adapted to send a confirmation message after receiving a first final-response from a first receiver to establish a session,
**characterized by**
means for starting a timer (T) when receiving the first final-response from the first receiver (Client B);
means adapted to send a confirmation message to establish a session with a second receiver if receiving before the timer (T) expires a second final-response from the second receiver subsequent to the first final-response, and send a message to release the session established with the second receiver; and
means adapted to send a message to release the dialog with the third receiver in connection with the session after receiving the expiration indication of the timer (T), if there is a dialog with the third receiver and the sender waits for a final-response form the third receiver in connection with the session.

## Patentansprüche

1. Verfahren zum Verarbeiten eines Verzweigungsdienstes basierend auf einem Sitzungseinleitungsprotokoll (SIP), das Folgendes umfasst:
Senden (304, 511) durch einen Sender (Client A) einer Bestätigungsnachricht nach dem Empfangen (510) einer ersten Abschlussantwort von einem ersten Empfänger (Client B), um eine Sitzung aufzubauen;
**gekennzeichnet durch** das
Starten eines Zeitgebers (T) **durch** den Sender (Client A), wenn er die erste Abschlussantwort von dem ersten Empfänger (Client B) empfängt;
Senden (304, 515) einer Bestätigungsnachricht, um eine Sitzung mit einem zweiten Empfänger (Client C) aufzubauen, falls eine zweite Abschlussantwort von dem zweiten Empfänger (Client C) anschließend an die erste Abschlussantwort empfangen wird (514), bevor der Zeitgeber (T) abläuft, und Senden (517) einer Anzeigenachricht, um die mit dem zweiten Empfänger (Client C) aufgebaute Sitzung freizugeben; und
Senden (521) einer Nachricht, um den Dialog mit einem dritten Empfänger (Client D) im Zusammenhang mit der Sitzung freizugeben, nach dem Empfangen der Ablaufangabe des Zeitgebers (T), falls es einen Dialog mit dem dritten Empfänger (Client D) gibt und der Sender (Client A) auf eine Abschlussantwort von dem dritten Empfänger (Client D) im Zusammenhang mit der Sitzung wartet.

2. Verfahren nach Anspruch 1, das ferner das Setzen eines Zeitgebers umfasst, der für alle Dialoge im Zusammenhang mit der Sitzung gültig ist, wobei der gesetzte Zeitraum eine Länge des Zeitgebers ist.

3. Verfahren nach Anspruch 2, wobei der Schritt des Sendens (521) einer Nachricht, um den Dialog mit dem dritten Empfänger (Client D) freizugeben, Folgendes umfasst:
beim Empfang einer Ablaufangabe des Zeitgebers Senden (521) einer Nachricht, um den Dialog mit dem dritten Empfänger (Client D), der auf eine Abschlussantwort wartet, im Zusammenhang mit der Sitzung durch den Sender (Client A), der die Sitzung eingeleitet hat, freizugeben.

4. Verfahren nach Anspruch 1 oder Anspruch 3, wobei die Empfänger (Clients B, C, D) eine automatische Antwort und eine manuelle Antwort unterstützen; oder die Empfänger (Clients B, C, D) nur die automatische Antwort unterstützen; oder die Empfänger (Clients B, C, D) nur die manuelle Antwort unterstützen.

5. Verfahren nach Anspruch 4, wobei der gesetzte Zeitraum nicht kleiner als eine Antwortzeit eines Empfängers (Clients B, C, D), der die automatische Antwort unterstützt, ist und nicht größer als eine Antwortzeit eines Empfängers (Clients B, C, D), der die manuelle Antwort unterstützt, ist.

6. Verfahren nach Anspruch 1, wobei die Nachricht, um den Dialog freizugeben, der auf eine Abschlussantwort wartet, eine BYE-Nachricht ist.

7. Verfahren nach Anspruch 1, wobei die Nachricht, um den Dialog freizugeben, der auf eine Abschlussantwort wartet, eine CANCEL-Nachricht ist.

8. Verfahren nach Anspruch 1, wobei die Nachrichten, die zwischen dem Sender (Client A), der die Sitzung einleitet, und den Empfängern (Clients B, C, D) wechselwirken, durch einen Zustands-Proxy-Server (Proxy-Server) weitergeleitet werden.

9. Sender, der eine Sitzung eines Verzweigungsdienstes basierend auf einem Sitzungseinleitungsprotokoll (SIP) einleitet, der Folgendes umfasst:
Mittel, die dafür ausgelegt sind, nach dem Empfangen einer ersten Abschlussantwort von einem ersten Empfänger eine Bestätigungsnachricht zu senden, um eine Sitzung aufzubauen,
**gekennzeichnet durch**
Mittel zum Starten eines Zeitgebers (T), wenn die erste Abschlussantwort von dem ersten Empfänger (Client B) empfangen wird;
Mittel, die dafür ausgelegt sind, eine Bestätigungsnachricht zu senden, um eine Sitzung mit einem zweiten Empfänger aufzubauen, falls eine zweite Abschlussantwort von dem zweiten Empfänger anschließend an die erste Abschlussantwort empfangen wird, bevor der Zeitgeber (T) abläuft, und eine Nachricht zu senden, um die mit dem zweiten Empfänger aufgebaute Sitzung freizugeben; und
Mittel, die dafür ausgelegt sind, nach dem Empfangen der Ablaufangabe des Zeitgebers (T) eine Nachricht zu senden, um den Dialog mit dem dritten Empfänger im Zusammenhang mit der Sitzung freizugeben, falls es einen Dialog mit dem dritten Empfänger gibt und der Sender auf eine Abschlussantwort von dem dritten Empfänger im Zusammenhang mit der Sitzung wartet.

## Revendications

1. Procédé de traitement d'un service de bifurcation selon un Protocole de Lancement de Session (SIP), comprenant :
l'envoi (304, 511), par un expéditeur (Client A), d'un message de confirmation après avoir reçu (510) une première réponse finale depuis un premier destinataire (Client B) pour établir une session ;
**caractérisé par**
le lancement, par l'expéditeur (Client A), d'une temporisation (T) à la réception de la première réponse finale depuis le premier destinataire (Client B) ;
l'envoi (304, 515) d'un message de confirmation afin d'établir une session avec un deuxième destinataire (Client C) en cas de réception (514), avant que la temporisation (T) expire, d'une deuxième réponse finale depuis le deuxième destinataire (Client C) après la première réponse finale, et l'envoi (517) d'un message indicateur pour libérer la session établie avec le deuxième destinataire (Client C) ; et
l'envoi (521) d'un message de libération du dialogue avec un troisième destinataire (Client D) relativement à la session après la réception de l'indication d'expiration de la temporisation (T), s'il existe un dialogue avec le troisième destinataire (Client D) et si l'expéditeur (Client A) attend une réponse finale du troisième destinataire (Client D) relativement à la session.

2. Procédé selon la revendication 1, comprenant en outre le réglage d'une temporisation valable pour tous les dialogues relativement à la session, et la période de temps établie étant une durée de la temporisation.

3. Procédé selon la revendication 2, dans lequel l'étape d'envoi (521) d'un message de libération du dialogue avec le troisième destinataire (Client D) comprend : à la réception d'une indication d'expiration de la temporisation, l'envoi (521) d'un message de libération du dialogue avec le troisième destinataire (Client D) attendant une réponse finale relativement à la session par l'expéditeur (Client A) qui a lancé la session.

4. Procédé selon la revendication 1 ou la revendication 3, dans lequel les destinataires (Clients B, C, D) supportent la réponse automatique et la réponse manuelle ; ou les destinataires (Clients B, C, D) supportent uniquement la réponse automatique ; ou les destinataires (Clients B, C, D) supportent uniquement la réponse manuelle.

5. Procédé selon la revendication 4, dans lequel la période de temps établie n'est pas inférieure à un temps de réponse d'un destinataire (Clients B, C, D) qui supporte la réponse automatique et n'est pas supérieure à un temps de réponse d'un destinataire (Clients B, C, D) qui supporte la réponse manuelle.

6. Procédé selon la revendication 1, dans lequel le message de libération du dialogue attendant une réponse finale est un message BYE.

7. Procédé selon la revendication 1, dans lequel le message de libération du dialogue attendant une réponse finale est un message CANCEL.

8. Procédé selon la revendication 1, dans lequel les messages d'interaction entre l'expéditeur (Client A) lançant la session et les destinataires (Clients B, C, D) sont transmis par un serveur mandataire d'état (Serveur Mandataire).

9. Expéditeur lançant une session d'un service de bifurcation selon le Protocole de Lancement de Session (SIP), comprenant :
un moyen adapté pour envoyer un message de confirmation après avoir reçu une première réponse finale depuis un premier destinataire pour établir une session ;
**caractérisé par**
un moyen pour lancer une temporisation (T) à la réception de la première réponse finale depuis le premier destinataire (Client B) ;
un moyen adapté pour envoyer un message de confirmation afin d'établir une session avec un deuxième destinataire en cas de réception, avant que la temporisation (T) expire, d'une deuxième réponse finale depuis le deuxième destinataire après la première réponse finale, et envoyer un message de libération de la session établie avec le deuxième destinataire ; et
un moyen adapté pour envoyer un message de libération du dialogue avec le troisième destinataire relativement à la session après la réception de l'indication d'expiration de la temporisation (T), s'il existe un dialogue avec le troisième destinataire et si l'expéditeur attend une réponse finale du troisième destinataire relativement à la session.
